# EUROPÄISCHE PATENTSCHRIFT

(11) **EP 0 937 614 B1**
(45) Veröffentlichungstag und Bekanntmachung des Hinweises auf die Patenterteilung: **15.10.2008**
(21) Anmeldenummer: 98119579.5
(22) Anmeldetag: 16.10.1998
(51) Int. Cl.: B60T 8/00

(54) **Verfahren und Vorrichtung zur Steuerung einer Bremsanlage**
Method and device for controlling a brake system
Procédé et appareil pour commander un système de freinage

(30) Priorität: 21.02.1998 DE 19811265
(43) Veröffentlichungstag der Anmeldung: 25.08.1999
(73) Patentinhaber: ROBERT BOSCH GMBH, 70442 Stuttgart (DE)
(72) Erfinder: Schmidt, Guenther, 97941 Tauberbischofsheim (DE); Binder, Juergen, 70599 Stuttgart (DE); Winner, Hermann, 76229 Karlsruhe (DE); Gottwick, Ulrich, 70192 Stuttgart (DE)

(56) Entgegenhaltungen:
- EP-A- 0 357 922
- WO-A-93/00236
- DE-A- 19 510 522
- DE-A- 19 548 248
- US-A- 5 246 283
- US-A- 5 567 021

## Beschreibung

### Stand der Technik

Die Erfindung betrifft ein Verfahren und eine Vorrichtung zur Steuerung einer Bremsanlage gemäß den Oberbegriffen der unabhängigen Patentansprüche.

Ein derartiges Verfahren bzw. eine derartige Vorrichtung ist beispielsweise aus dem SAE-Paper 960991 bekannt. Dort wird eine elektrohydraulische Bremsanlage beschrieben, bei welcher aus der Bremspedalbetätigung durch den Fahrer ein Bremswunsch des Fahrers abgeleitet wird. Dieser wird gegebenenfalls unter Berücksichtigung von weiteren Betriebsgrößen in Sollbremsdrücke für die einzelnen Radbremsen umgerechnet. Die Sollbremsdrücke werden für jedes Rad durch Druckregelkreise auf der Basis des vorgegebenen Solldrucks sowie des im Bereich der Radbremse gemessenen Istbremsdrucks eingeregelt. Der Fahrerbremswunsch wird dabei durch wenigstens zwei Meßeinrichtungen ermittelt. Da die an den Radbremsen ausgeübte Bremskraft auf elektrischem Wege abhängig von dem durch diese Meßeinrichtungen erfaßten Bremswunsch eingestellt wird, sind Maßnahmen zur Überwachung der Funktionsfähigkeit dieser Meßeinrichtungen und somit Maßnahmen zur Überprüfung der Richtigkeit des Fahrerbremswunsches vorgesehen. Daher werden die vorhandenen Sensoren zusammen mit dem Bremspedalschalter auf Plausibilität zur Fehlererkennung überprüft. Eine konkrete Ausführung dieser Überprüfung ist in der DE 195 10 522 A1 gezeigt. Dort sind auch Maßnahmen vorgeschlagen, die im Fehlerfall einer der Meßeinrichtungen getroffen werden. In einem Anwendungsbeispiel hat es sich erwiesen, daß diese Vorgehensweise nicht alle vorhandenen Möglichkeiten ausschöpft.

Aus der Schrift DE 195 48 248 A1 ist ein elektrohydraulisches Bremssystem bekannt, bei dem sowohl ein Pedalwegsensor als auch ein Drucksensor ein Signal bereitstellt, das den vom Pedal erzeugten Druck im Hauptbremszylinder darstellt. Eine Pumpe, die von einem Pumpenmotor angetrieben wird, fördert Hydraulikflüssigkeit von dem mit dem Hauptbremszylinder in Kontakt stehendem Vorratsbehälter in einen Druckspeicher. Über die Ansteuerung der Einlassventile bzw. Auslassventile kann so Druck in den Radbremsen aufgebaut bzw. abgebaut werden. Die Ansteuerung der Ventile erfolgt dabei in Abhängigkeit von wenigstens einem der Signale des Pedalwegsensors oder des Drucksensors.

Es ist Aufgabe der Erfindung, geeignete, die Betriebssicherheit der Bremsanlage sicherstellenden Steuermaßnahmen im Fehlerfall anzugeben.

Diese Aufgabe wird durch die kennzeichnenden Merkmale der unabhängigen Patentansprüche erreicht.

### Vorteile der Erfindung

Durch geeignete Plausibilitätsüberprüfung der beiden die Bremspedalbetätigung repräsentierenden Meßsignale, vorzugsweise des Pedalweges und eines durch die Pedalbetätigung aus dem Hauptzylinder ausgesteuerten Bremsdrucks, sowie eines die Betätigung anzeigenden Bremspedalschalterzustandes wird eine vollständige Fehlererkennung und Fehlerseparierung gewährleistet, die eine genaue Angabe des vorhandenen Fehlers erlaubt. Besonders vorteilhaft ist, daß einzelne Fehler durch Verknüpfungen der Ergebnisse der Plausibilitätsabfragen isoliert angegeben werden können.

Vorteilhaft ist ferner, daß im Rahmen der Plausibilitätsüberprüfung nicht nur die die Pedalbetätigung repräsentierenden Größen, sondern auch andere Größen wie Raddrucksollwert und Raddruckistwert herangezogen werden. Dadurch wird die Fehlererkennung deutlich verbessert.

Besonders vorteilhaft ist, daß im Fehlerfall die Betriebssicherheit der Bremsanlage sichergestellt ist, wobei je nach Fehler unterschiedliche Maßnahmen getroffen werden. Dabei wird die Verfügbarkeit der elektrischen Steuerung der Bremsanlage so lange wie möglich aufrechterhalten.

Besonders vorteilhaft ist, daß bei zumindest einem Fehlerbild die Bremsanlage für die Vorderradbremsen auf hydraulische Betätigung umgeschaltet wird. In diesem Zusammenhang ist es ferner vorteilhaft, daß die Hinterradbremsen weiterhin elektronisch geregelt werden können, wobei die Betriebssicherheit durch eine erweiterte Plausibilitätsüberprüfung der die Betätigung repräsentierenden Meßsignale mit Bremsdrucksignale aus den Vorderachsbremsen gewährleistet ist.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt ein bevorzugtes Ausführungsbeispiel einer elektrohydraulischen Bremsanlage, während in Figur 2 die die elektrohydraulische Bremsanlage steuernde Steuereinheit dargestellt ist. In den Figuren 3 und 4 sind Flußdiagramme dargestellt, die eine bevorzugte Realisierung der Fehlerüberwachung und -erkennung als Programm eines Mikrocomputers darstellen. Figur 5 zeigt anhand eines Flußdiagramms die bevorzugte Realisierung eines Notbremsbetriebs im Fehlerfall.

### Beschreibung von Ausführungsbeispielen

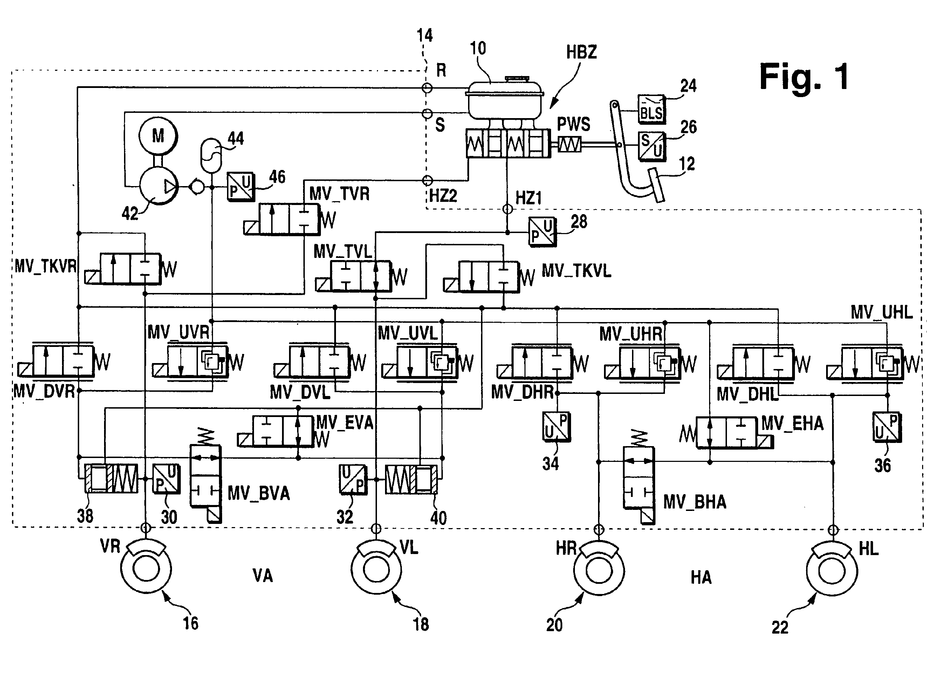

Figur 1 zeigt ein bevorzugtes Ausführungsbeispiel einer elektrohydraulischen Bremsanlage. Sie zeigt einen Hauptbremszylinder HBZ mit Vorratsbehälter 10, an den ein vom Fahrer betätigbares Bremspedal angebracht ist. Ferner ist ein Hydraulikaggregat 14 vorgesehen, welches Ventil- und Pumpenanordnungen zur Steuerung der Radbremsen 16, 18, 20 und 22 enthält. Mit dem Bremspedal 12 ist ein Bremspedalschalter 24 verbunden, welcher bei Betätigen des Bremspedals schließt, und eine Meßeinrichtung 26 zur Erfassung der Auslenkung des Bremspedals. Der Bremspedalschalter kann als einfacher Schließer ausgelegt sein oder zur Verbessserung der Überwachbarkeit als doppelter Schalter mit einem Öffner und einem Schließer. Ebenso kann die Meßeinrichtung 26 zur Erfassung der Auslenkung des Pedals redundant ausgelegt werden. Ferner ist ein Pedalwegsimulator PWS vorgesehen, welcher für den Fahrer bei Betätigen des Bremspedals ein gewohntes Pedalgefühl bezüglich Gegenkraft und Pedalauslenkung simuliert. An den Hauptbremszylinder HBZ sind die zwei Bremskreise HZ1 und HZ2 angeschlossen. In diesen sind jeweils ein Trennventil MV_TVR und MV_TVL eingefügt, welches bei elektrisch gesteuerter Bremsanlage durch Bestromung geschlossen wird. Vor dem Trennventil mißt in zumindest einem der Bremskreise ein Drucksensor 28 den vom Fahrer über die Bremspedalbetätigung aufgebrachten Druck. Bei geschlossenen Trennventilen ist der Hauptbremszylinder hydraulisch vom Druckregelsystem abgetrennt. Im Druckregelsystem sind für jede Radbremse ein Druckmodulator für die Bremsdruckregelung enthalten. Ein Druckmodulator besteht dabei aus je einem Einlaßventil (MV_UVR, MV_UVL, MV_UHR, MV_UHL), je einem Auslaßventil (MV_DVR, MV_DVL, MV_DHR, MV_DHL) und je einem Drucksensor 30, 32, 34 und 36, der den Druck in der zur Radbremse führenden Leitung mißt. In den beiden Vorderraddruckmodulatoren befindet sich je ein Medientrennerkolben 38 und 40 zwischen den Ventilen (Ein- und Auslaßventil) und den Drucksensoren bzw. der Radbremse. Die Druckmodulatoren sind über Ausgleichsventile MV_BVA und MV_BHA verbunden, die bei Bestromung voneinander unabhängig gesteuert werden können. Ferner sind Entlastungsventile MV_EVA bzw. MV_EHA für jede Achse vorgesehen, die in unbestromtem Zustand den Druckabbau aus den Raddruckmodulatoren einer Achse erlauben. Sie verbinden die Druckmodulatoren einer Achse mit den zum Vorratsbehälter 10 führenden Rückführleitungen. Im elektrisch gesteuerten Betriebszustand sind diese beiden Ventile permanent bestromt, d.h. geschlossen. Ferner ist jeweils ein Temperaturkompensationsventil MV_TKVL und MV_TKVR für jeden Vorderraddruckmodulator vorgesehen. Diese Ventile sind unbestromt geschlossen und werden zum Druckabbau aus dem Druckmodulator eines Vorderrades durch Bestromung geöffnet, wenn bestimmte Bedingungen, insbesondere eine sehr lange Bremsdauer, vorliegen. Die Temperaturkompensationsventile verbinden die Bremsleitung zur Radbremse mit der Rücklaufleitung. Die Energie für die Bremsdruckmodulation kommt aus einer von einem Elektromotor angetriebenen Einkolben-Hochdruckpumpe 42. Diese ist an einen Hochdruckspeicher 44 angeschlossen, der als Zwischenpuffer dient und dessen Druck durch einen Drucksensor 46 erfaßt wird. Die Druckleitung der Pumpe 42 führt zu den Einlaßventilen der Radbremsen, während die Saugleitung der Pumpe 42 mit dem Vorratsbehälter 10 verbunden ist. Bezüglich Einzelheiten der hydraulischen Schaltung wird auf das in Figur 1 dargestellte bevorzugte Ausführungsbeispiel verwiesen. Die nachfolgend beschriebene erfindungsgemäße Vorgehensweise wird jedoch nicht nur in Verbindung mit einer solchen Hydraulikschaltung vorteilhaft angewendet, sondern überall dort, wo im Zusammenhang mit einer elektrisch gesteuerten Bremsanlage der Bremswunsch des Fahrer über Meßeinrichtungen erfaßt wird, Fehler im Bereich dieser Bremswunscherfassung erkannt und diesen Fehlern begegnet werden muß.

Im Normalbetrieb arbeitet die in Figur 1 beschriebene Bremsanlage wie folgt. Der Fahrer tritt auf das Bremspedal. Er spürt dabei eine wegabhängige Gegenkraft. Diese Wegabhängigkeit wird durch die definierte Charakteristik des Pedalwegsimulators gebildet. Bei Sensierung eines Bremswunsches über den Pedalwegsensor, den Bremspedalschalter und/oder den Drucksensor werden die Trennventile (MV_TVR und MV_TVL) und die Entlastungsventile (MV_EVA und MV_EHA) geschlossen. Im Hauptbremszylinder HBZ baut sich ein Druck auf, der aus der Pedalkraft resultiert. Aus den Signalen des Bremslichtschalters 24, des Wegsensors 26 und/oder des Drucksensors 28 wird der Bremswunsch des Fahrers beispielsweise als Sollverzögerung oder als Sollbremskraft errechnet. Aus diesem Bremswunsch werden die einzelnen Sollradbremsdrücke gebildet. Je nach Fahrzustand und Schlupfbedingung werden diese Drücke modifiziert und über die Raddruckmodulatoren durch Ventilbestromungen eingeregelt. Im geschlossenen Regelkreis werden bei jeder Radbremse die aktuellen Drücke an den Raddrucksensoren für den Soll-Ist-Abgleich herangezogen. Bei unterschiedlichen Solldrücken im linken und rechten Rad einer Achse werden die Ausgleichsventile geschlossen und in jeder Radbremse der vorgegebene Solldruck durch Ansteuern der Einlaß- und Auslaßventile im Sinne einer Regelung des Ist-Bremsdruckes auf den Sollbremsdruck eingeregelt. Zum Druckaufbau an einer Radbremse wird das Einlaßventil so weit bestromt, daß sich der gewünschte Solldruck in der Radbremse mit der gewünschten Dynamik ausbildet. Eine Druckabnahme wird entsprechend durch Bestromung des Auslaßventils erreicht, wobei Bremsflüssigkeit in den Vorratsbehälter über die Rücklaufleitung zurückfließt. Die Entlastungsventile kommen im Fehlerfall des Systems zur Wirkung. Wenn während einer Bremsung das elektrische System ausfällt, fallen alle Ventile in ihren unbestromten Zustand zurück. Die Entlastungsventile öffnen dann die Druckmodulatoren zur Rücklaufleitung, so daß kein Bremsdruck eingesperrt werden kann. Ebenso gestatten diese Ventile im Ruhezustand den Volumenausgleich zum Behälter bei Temperaturschwankungen.

Eine Betätigung der Pumpe 42 findet bei aktivem Bremsvorgang und/oder bei einem Absinken des Speicherdrucks im Speicher 44 unter einen vorbestimmten Wert statt. Neben dieser Funktion wird der erfaßte Speicherdruck 46 auch im Rahmen der Regelung ausgewertet, da er im wesentlichen den am Eingang der Einlaßventile liegenden Druck repräsentiert.

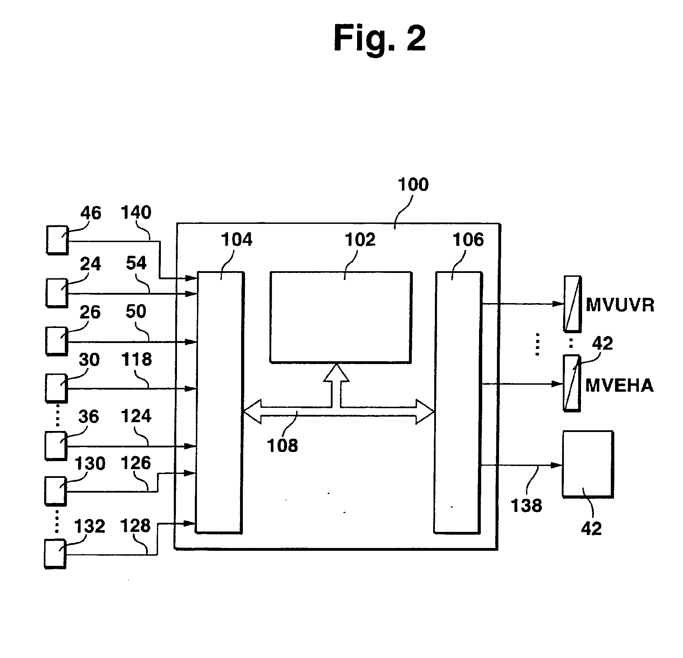

Die elektrisch betätigbaren Ventile sowie die Pumpe 42 werden von wenigstens einer elektronischen Steuereinheit angesteuert, die in Figur 2 skizziert ist. Sie umfaßt dabei wenigstens einen Mikrocomputer 102, eine Eingangsschaltung 104, eine Ausgangsschaltung 106 und ein diese Elemente verbindendes Bussystem 108 zum gegenseitigen Datenaustausch. Der Eingangsschaltung 104 sind die Leitungen 50 und 54 von Bremspedalschalter 24 und Pedalwegsensor 26 zugeführt. Ferner verbinden Eingangsleitungen 118 bis 124 die Eingangsschaltung 104 mit den jeder Radbremse zugeordneten Sensoren 30 bis 36. Ferner ist eine Eingangsleitung 140 vorgesehen, die von der Meßeinrichtung 46 zur Erfassung des Speicherdrucks der Eingangsleitung 104 zugeführt ist. Weitere Eingangsleitungen 126 bis 128 verbinden die Eingangsschaltung 104 mit Meßeinrichtungen 130 bis 132 zur Erfassung weiterer Betriebsgrößen der Bremsanlage, des Fahrzeugs und/oder dessen Antriebseinheit. Derartige Betriebsgrößen sind beispielsweise die Radgeschwindigkeiten, gegebenenfalls das von der Antriebseinheit abgegebene Motormoment, Achslasten, der Druck in der Bremsleitung (Sensor 28), etc. An die Ausgangsschaltung 106 sind mehrere Ausgangsleitungen angeschlossen. Beispielhaft sind die Ausgangsleitungen dargestellt, über welche die Ventile der Druckmodulatoren betätigt werden. Über eine weitere Ausgangsleitung 138 wird die Pumpe 42 angesteuert. Die Steuereinheit 100 steuert die Bremsanlage abhängig von den zugeführten Signalgrößen im oben dargestellten Sinne.

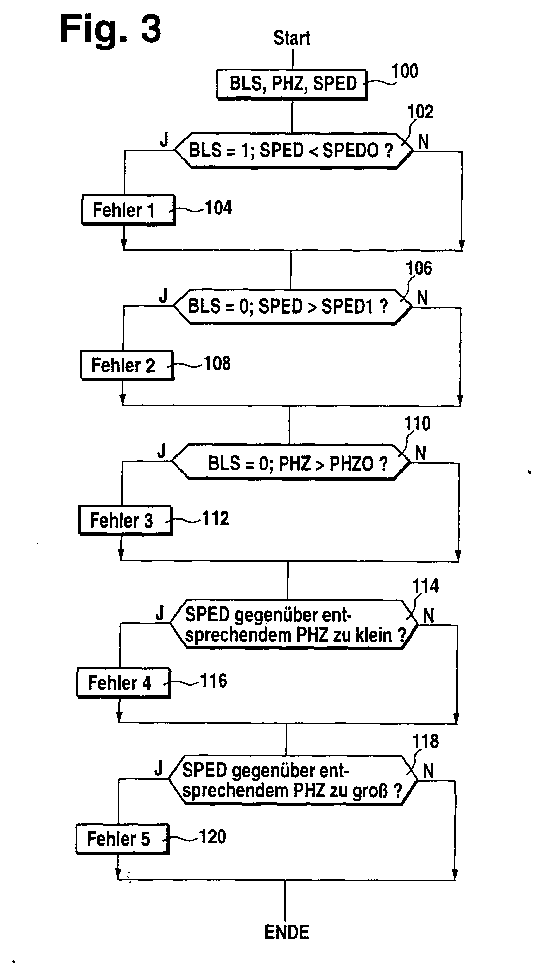

Im bevorzugten Ausführungsbeispiel stehen zur Erfassung der Bremspedalbetätigung ein Bremspedalschaltersignal BLS, ein den aus dem Hauptzylinder durch die Bremspedalbetätigung ausgesteuerten Bremsdruck PHZ sowie ein den Bremspedalweg SPED anzeigendes Signal zur Verfügung. Diese Signale werden zur Fehlererkennung miteinander verknüpft. Das bevorzugte Ausführungsbeispiel ist anhand des Flußdiagramms in Figur 3 dargestellt. Das dort skizzierte Programm läuft während und außerhalb eines Bremsvorgangs in vorgegebenen Zeitintervallen ab.

Im ersten Schritt 100 werden die zur Verfügung stehenden Betätigungsgrößen eingelesen. Im darauffolgenden Abfrageschritt 102 wird überprüft, ob der Bremspedalschalter eingeschaltet ist, d.h. die Bremse betätigt ist (BLS = 1) und der Bremspedalweg SPED kleiner als ein vorgegebener Grenzwert SPED0 ist. Dieser Grenzwert für den Pedalwert wird im bevorzugten Ausführungsbeispiel beispielsweise auf einen Pedalweg vor 1, 5 mm gesetzt. Sind diese beiden Bedingungen erfüllt, wird gemäß Schritt 104 eine Marke "Fehler1" gesetzt. Ist eine der Bedingungen nicht erfüllt, so kann von einem fehlerfreien Betrieb ausgegangen werden. Gegebenenfalls wird in einem Ausführungsbeispiel die möglicherweise gesetzte Marke (Schritt 104) wieder zurückgesetzt. Danach wird im Schritt 106 die Bedingung überprüft, ob das Bremspedalschaltersignal den Wert Null aufweist, d.h. keine Betätigung des Bremspedals anzeigt und der Pedalweg größer als ein zweiter vorgegebener Grenzwert SPED1 ist. Dieser Grenzwert ist im bevorzugten Ausführungsbeispiel beispielsweise 20 mm. Sind diese beiden Bedingungen erfüllt, wird gemäß Schritt 108 eine Marke "Fehler2" gesetzt. Ist eine der Bedingungen nicht erfüllt, wird wie nach Schritt 108 mit dem Abfrageschritt 110 weitergefahren. Gegebenenfalls wird bei einer Nein-Antwort die gesetzte Marke zurückgesetzt. Im Abfrageschritt 110 wird überprüft, ob das Bremspedalschaltersignal den Wert Null, d.h. keine Betätigung, anzeigt, während der Hauptzylinderbremsdruck PHZ einen vorgegebenen Grenzwert PHZ0 überschreitet. Im bevorzugten Ausführungsbeispiel wird dieser Grenzwert zu 5 bar gewählt. Sind diese Bedingungen erfüllt, wird gemäß Schritt 112 die Marke "Fehler3" gesetzt, andernfalls, gegebenenfalls unter Rücksetzen der Marke, mit Schritt 114 fortgefahren. Dort werden die Pedalweg- und Drucksignale miteinander verglichen. Zeigt es sich, daß der Pedalweg gegenüber dem entsprechenden Druckwert zu klein ist, d.h. für den angezeigten Pedalweg ein zu großer Druck bzw. für den angezeigten Druck eine zu kleiner Pedalweg gemessen wird, wird gemäß Schritt 116 die Marke "Fehler4" gesetzt. Liegen die beiden Werte zueinander mit Blick auf die in Schritt 114 überprüfte Relation richtig, so wird, gegebenenfalls unter Rücksetzen der Marke, wie nach Schritt 116 in Schritt 118 überprüft, ob das Pedalwegsignal gegenüber dem entsprechenden Drucksignal zu groß ist. Dies bedeutet, daß bei gegebenem Pedalweg der Druckwert gegenüber einem Referenzwert zu klein ist bzw. daß bei gegebenem Drucksignalwert der gemessene Pedalweg gegenüber einem Referenzwert zu groß ist. Ist dies der Fall, wird in Schritt 120 die Marke "Fehler5" gesetzt und das Programm beendet. Bei einer Nein-Antwort im Schritt 118 wird das Programm, gegebenenfalls unter Rücksetzen der Marke, ebenfalls beendet.

Das in Figur 3 skizzierte Programm läuft sowohl während des Bremsvorgangs als auch außerhalb des Bremsvorgangs ab. Ferner wird es auch durchlaufen, wenn bereits ein Fehler erkannt wurde.

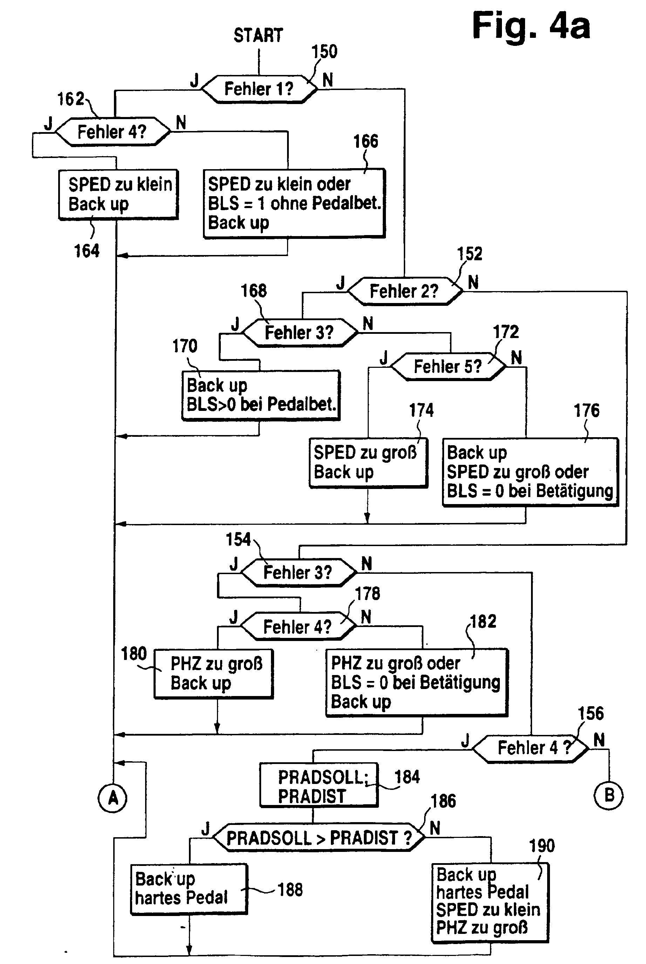

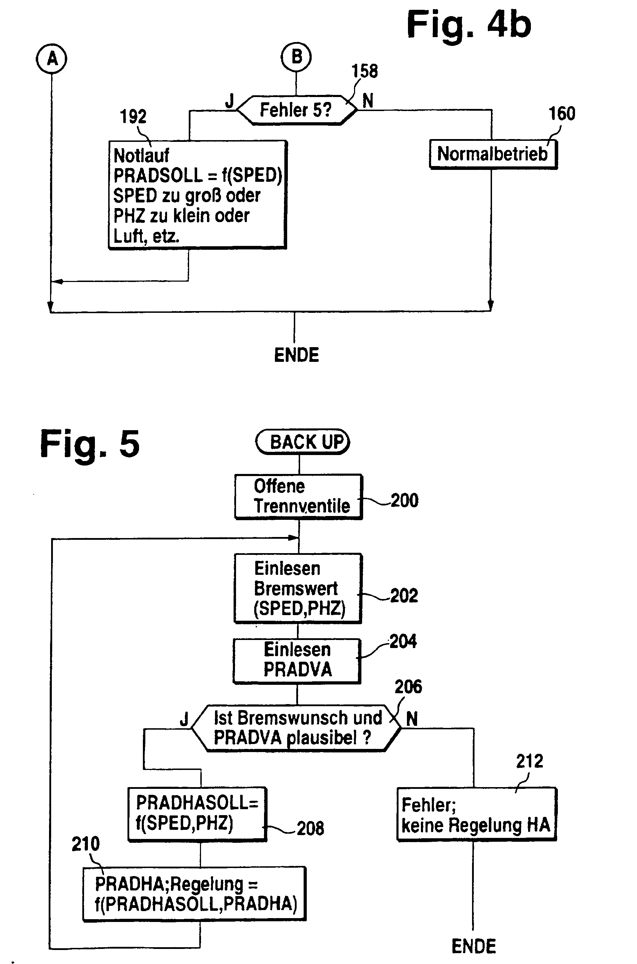

Im Flußdiagramm der Figur 4, welches ebenfalls die Realisierung der Vorgehensweise als Rechnerprogramm darstellt, ist ein bevorzugtes Ausführungsbeispiel dargestellt, welche Schlüsse bezüglich Fehlerursache und möglicher Reaktion bei erkannten Fehlern gezogen werden. Die Reaktion bei erkanntem Fehler kann hier derart erfolgen, daß für den Fahrer selbst bei Fehlerauftritt eine hohe Verfügbarkeit der Betriebs- u. Hilfsbremsanlage besteht. Dazu schaltet die Vorrichtung je nach Fehlerursache in unterschiedliche Notbremsbetriebmoden, die je nach Art des Fehlers die der Vorrichtung funktionsbereit zur Verfügung stehende Elemente ausnutzt. Im bevorzugten Ausführungsbeispiel wird zwischen 3 Notbremsbetrieben unterschieden: Einem Notbremsbetrieb, bei dem die elektrische Steuerung passiv ist, einem bei dem die Bremswunschbildung geändert ist und einem elektrischen Notlauf, bei dem nur Teile der Vorrichtung passiv sind.

Das in Figur 4 dargestellte Programm wird ebenfalls zu vorgegebenen Zeitpunkten außerhalb und während eines Bremsvorgangs mit und ohne Notbetrieb durchlaufen, damit die Fehlerseparierung auch während des Notbremsbetriebs möglich ist. In einem anderen Ausführungsbeispiel wird darauf verzichtet und das Programm nur dann durchlaufen, wenn ein Notbremsbetrieb eingeleitet ist, der keinen Übergang von der elektrisch gesteuerten Bremsung zur rein hydraulisch gesteuerten Bremsung an wenigstens einer Radbremse beinhaltet.

Im ersten Schritt 150 wird überprüft, ob die Marke "Fehler1" gesetzt ist. Ist dies nicht der Fall, wird im Schritt 152 überprüft, ob die Marke "Fehler2" gesetzt ist. Ist diese Marke nicht gesetzt, wird im Schritt 154 überprüft, ob die Marke "Fehler3" gesetzt ist. Ist auch dies nicht der Fall, wird im Schritt 156 die Marke "Fehler4" überprüft. Ist auch diese nicht gesetzt, wird gemäß Schritt 158 die Fehlermarke 5 abgefragt. Ist auch diese nicht gesetzt, wird gemäß Schritt 160 vom Normalbetrieb der Bremsanlage ausgegangen und die elektronische Regelung der Bremse abhängig vom Fahrerbremswunsch durchgeführt. Nach Schritt 160 wird das Programm beendet und zum nächsten Zeitpunkt durchlaufen.

Hat Schritt 150 ergeben, daß die Fehlermarke 1 gesetzt ist, wird im Schritt 162 überprüft, ob die Fehlermarke 4 gesetzt ist. Ist dies der Fall, so wird gemäß Schritt 164 die Schlußfolgerung gezogen, daß der Pedalwegsensor einen zu kleinen Weg anzeigt. Dies deshalb, weil bei betätigtem Pedal der Pedalweg zu klein ist und gleichzeitig bei gegebenem Drucksignalwert der Pedalweg ebenfalls zu klein ist. Diese Fehlerinformation wird angezeigt und/oder abgespeichert. Ferner wird auf einen Notbremsbetrieb (back-up) umgeschaltet, in dem alle Ventile unbestromt sind und damit die Trennventile MV_TVR und MV_TVL geöffnet werden. Der Fahrer bremst dann die Vorderachse über die dadurch entstandene hydraulische Verbindung vom Hauptbremszylinder zu den Radbremsen. In einem bevorzugten Ausführungsbeispiel wird die Hinterachse weiterhin elektrisch geregelt, indem der Drucksollwert entsprechend einem Bremswunsch entweder auf der Basis des Drucksignals oder einer Kombination von Druck- und Pedalwegsignal gebildet wird. Eine bevorzugte Ausführung dieses elektrischen Notlaufbetriebs ist anhand des Flußdiagramms der Figur 5 dargestellt. Ist gemäß Schritt 162 die Fehlermarke 4 nicht gesetzt, wird gemäß Schritt 166 ebenfalls der oben beschriebene Notbremsbetrieb eingeleitet. Als Fehlerinformation wird angezeigt bzw. abgespeichert, daß entweder der Pedalweggeber fehlerbehaftet ist, weil er einen zu kleinen Wert liefert oder der Bremspedalschalter ohne Pedalbetätigung eine Pedalbetätigung anzeigt. Nach Schritt 164 bzw. 166 wird das Programm beendet.

Hat Schritt 152 ergeben, daß die Fehlermarke 2 gesetzt ist, wird im Schritt 168 überprüft, ob auch die Fehlermarke 3 gesetzt ist. Ist dies der Fall, wird ebenfalls der Notbremsbetrieb eingeleitet und gemäß Schritt 170 als Fehlerzustand ein defekter Bremspedalschalter angegeben, angezeigt bzw. gespeichert, welcher trotz Pedalbetätigung den Wert Null anzeigt. Ist die Fehlermarke 3 nicht gesetzt, wird im Schritt 172 überprüft, ob die Fehlermarke 5 gesetzt ist. Ist dies der Fall, so wird gemäß Schritt 174 der Notbremsbetrieb eingeleitet und als Fehlerbild ein zu großer Wert des Bremspedalwegs ermittelt, angezeigt bzw. gespeichert. Liegt auch die Fehlermarke 5 nicht vor, so wird gemäß Schritt 176 ebenfalls der Notbremsbetrieb eingeleitet und als Fehlerbild entweder von einem zu großen Pedalwegsignal ausgegangen oder von einem defekten Bremspedalschalter, der trotz Betätigung den Wert Null anzeigt. Auch diese Fehlerinformation wird angezeigt und/oder gespeichert. Nach den Schritten 170, 174 und 176 wird das Programm beendet.

Ist gemäß Schritt 154 die Fehlermarke 3 gesetzt, wird überprüft, ob auch die Fehlermarke 4 gesetzt ist (Schritt 178). Ist dies der Fall, wird gemäß Schritt 180 der Notbremsbetrieb eingeleitet und als Fehler ein zu großer Wert des Drucksensors isoliert. Ist die Fehlermarke 4 nicht gesetzt, wird im Schritt 182 ebenfalls der Notbremsbetrieb eingeleitet und als Fehlerbild ein zu großer Druckwert oder ein trotz Betätigung den Wert Null anzeigender Bremspedalschalter angenommen. Nach Schritt 180 bzw. 182 wird das Programm beendet.

Ist gemäß Schritt 156 die Fehlermarke 4 gesetzt, wird im Schritt 184 ein Raddruckistwert PRADIST einer Vorderradbremse sowie der zugehörige Bremsdrucksollwert PRADSOLL eingelesen. Daraufhin wird im Schritt 186 überprüft, ob der Sollwert stationär größer als der Istwert ist. Ist dies der Fall, wird gemäß Schritt 188 der Notbremsbetrieb eingeleitet und als Fehlerbild ein hartes Pedal angenommen. Dieses harte Pedal hat seine Ursache darin, daß ein Trennventil fehlerhaft geöffnet ist. Die Schritte 184 und 186 werden dabei für jedes Vorderrad getrennt durchlaufen. Hat Schritt 186 ergeben, daß im stationären Betrieb der Sollwert nicht größer als der Istdruckwert ist, wird gemäß Schritt 190 ebenfalls in den Notbremsbetrieb geschaltet und als Fehler ein hartes Pedal, ein zu kleiner Pedalweg oder ein zu großer Druckwert angenommen. Das harte Pedal wird dann gegebenenfalls ursächlich daher rühren, daß der Pedalwegsimulator oder der Schwimmkreiskolben im Hauptzylinder klemmt. Nach den Schritten 188 und 190 wird das Programm beendet.

Hat Schritt 158 ergeben, daß die Fehlermarke 5 gesetzt ist, so wird im Schritt 192 ein Notlauf eingeleitet, in dem nicht die hydraulische Verbindung zwischen Bremspedal und Radbremsen freigeschaltet wird, sondern in dem die Raddrucksollwerte PRADSOLL auf der Basis des Pedalwegsignals SPED gebildet wird. Als Fehlerbild wird angegeben, daß entweder der Pedalweg zu groß gemessen wird, der Druckwert zu klein ist, Luft im Bremskreis ist, die Feder des Pedalwegsimulators gebrochen ist oder eine Leckage im hydraulischen Kreis vorliegt. Nach Schritt 192 wird das Programm beendet.

Wird infolge eines Fehlers ein Notbremsbetrieb eingeleitet, während dem die hydraulische Verbindung zwischen Bremspedal und Radbremsen freigeschaltet ist, wird im bevorzugten Ausführungsbeispiel auf ein weiteres Durchlaufen des in Figur 4 dargestellten Programms im aktuellen Betriebszyklus verzichtet. Es wird dann erst wieder im nächsten Betriebszyklus durchgeführt. Anders ist es, wenn gem. Schritt 192 ein elektrischer Notlauf eingeleitet wird. In diesem Fall wird die in Figur 4 dargestellte Überwachung weiterhin durchgeführt.

Wird dann ein Fehler erkannt, der zu einem Notbremsbetrieb führt, wird auf diesen übergegangen.

Ein bevorzugtes Ausführungsbeispiel für den elektrischen Notlaufbetrieb (Back Up) ist in Figur 5 dargestellt. Auch dieses stellt ein Flußdiagramm dar, welches die bevorzugte Realisierung der Vorgehensweise als Rechnerprogramm skizziert.

Wurde ein Fehler oder eine Fehlerkombination erkannt, die zu diesem Notbremsbetrieb führt, wird das in Figur 5 dargestellte Programm eingeleitet. Zunächst werden im Schritt 200 die Trennventile MV_TVR und MV_TVL in ihren stromlosen Zustand geschaltet, d.h. geöffnet. Daraufhin werden gemäß Schritt 202 die Bremswunschsignale Pedalweg und Hauptbremszylinderdruck eingelesen. Die Bremskraft an den Vorderradbremsen wird durch Muskelkraft über die jetzt offene hydraulische Verbindung vom Hauptzylinder zu den Radbremsen aufgebaut. Der dort vorhandene Druck wird für jedes Rad im Schritt 204 eingelesen. Daraufhin wird im Schritt 206 überprüft, ob der aus den Betätigungssignalen gebildete Bremswunsch (allein aus dem Wegsignal oder dem Drucksignal oder einer Kombination der beiden Signale) mit den erfaßten Bremsdrücken in den Vorderachsbremsen plausibel ist. Ist dies der Fall, so wird die Hinterachsbremse weiterhin elektronisch geregelt. Gemäß Schritt 208 wird dann der Sollwert für die Hinterachsbremsen auf der Basis des Bremswunsches bestimmt und gemäß Schritt 210 eine Regelung des Radbremsdrucks abhängig vom Sollwert und den gemessenen Istwerten durchgeführt. Danach wird das Programm mit Schritt 202 wiederholt. Ist gemäß Schritt 206 Bremswunsch und Vorderachsbremsdruck nicht zueinander plausibel, liegt ein schwerer Fehler vor, so daß gemäß Schritt 212 auf die Hinterachsregelung verzichtet wird und der in Figur 5 dargestellte Programmteil beendet ist.

Im bevorzugten Ausführungsbeispiel wird dieser Notbremsbetrieb dann durchgeführt, wenn ein Sensor zur Fahrerbremswunscherfassung ausfällt. Dies ist der Fall im Schritt 164, 174 und 180. Der Bremswunsch wird dann von dem nicht als fehlerhaft erkannten Betätigungssignal gebildet. In einem anderen Ausführungsbeispiel wird diese Art des Notbremsbetriebs bei allen Fehlerzuständen durchgeführt, wobei bei nicht eindeutiger Fehlerzuordnung eine Kombination aus Pedalweg und Druck, vorzugsweise der größere der beiden Werte, zur Ermittlung des Sollwertes herangezogen wird.

Die ermittelten Fehlerbilder werden angezeigt bzw. in einem Fehlerspeicher gemäß einem vorgegebenen Fehlercode abgelegt.

Wurde ein Fehler erkannt, muß in einem bevorzugten Ausführungsbeispiel eine vorgegebene Filterzeit ablaufen, nach der erst die Ermittlung eines weiteren Fehlers möglich ist.

In einem Ausführungsbeispiel ist es möglich, daß erkannte Fehler zurückgesetzt werden, wenn der Fehlerzustand nicht mehr erkannt wird. Dann wird auch vom Notbremsbetrieb in der Normalbetrieb gewechselt. Ist in einem anderen Ausführungsbeispiel dieses Verhalten unerwünscht, bleibt der Notbremsbetrieb zumindest bis zur Beendigung des Betriebszyklus auch dann erhalten, wenn der ermittelte Fehler nicht mehr zu ermitteln ist.

## Patentansprüche

1. Verfahren zur Steuerung der Bremsanlage eines Kraftfahrzeugs, wobei die Betätigung des Bremspedals durch wenigstens zwei Signale erfaßt wird, wobei abhängig von wenigstens einem Betätigungssignale Sollwerte für die an den Radbremsen aufzubauenden Bremsdrücke ermittelt werden und diese eingeregelt werden, wobei
- Fehler im Bereich Erfassung der Betätigung des Bremspedals ermittelt werden und
- bei einem Fehler im Bereich Erfassung der Betätigung des Bremspedals die Radbremsdrücke an den Vorderachsbremsen durch die Bremspedalbetätigung auf hydraulischem Wege aufgebracht werden,
**dadurch gekennzeichnet, dass**
die Bremsdrücke an den Hinterachsbremsen bei einem Fehler weiterhin elektrisch auf der Basis von Soll- und Istbremsdrücken geregelt werden.

2. Verfahren nach Anspruch 1, **dadurch gekennzeichnet, daß** die hydraulische Ansteuerung der Vorderachsbremsen bei erkanntem Ausfall einer Meßeinrichtung erfolgt.

3. Verfahren nach Anspruch 1 oder 2, **dadurch gekennzeichnet, daß** im Fehlerfall eine Plausibilitätsüberprüfung zwischen den Bremsdrücken der Vorderachsbremsen und dem wenigstens einen die Betätigung des Bremspedals erfassenden Signal erfolgt.

4. Verfahren nach Anspruch 3, **dadurch gekennzeichnet, daß** bei vorhandener Plausibilität die Hinterachsbremsen geregelt, bei nicht vorhandener Plausibilität die Hinterachsbremsen abgeschaltet sind.

5. Verfahren nach einem der vorhergehenden Ansprüche, **dadurch gekennzeichnet, daß** die erkannten Fehler als Fehlerinformationen codiert in einem Speicher abgelegt werden.

6. Vorrichtung zur Steuerung der Bremsanlage eines Kraftfahrzeugs, mit einer elektronischen Steuereinheit, die die Betätigung des Bremspedals durch wenigstens ein Signal erfaßt, die abhängig von diesem wenigstens einen Betätigungssignal Sollwerte für die an den Radbremsen aufzubauenden Bremsdrücke ermittelt und diese eingeregelt, die ferner Fehler im Bereich Erfassung der Betätigung des Bremspedals ermittelt, wobei die Steuereinheit bei einem Fehler im Bereich Erfassung der Betätigung des Bremspedals die hydraulischen Verbindung zwischen dem Bremspedal und den Radbremsen freischaltet, so daß die Radbremsdrücke an der Vorderachse durch die Bremspedalbetätigung auf hydraulischem Wege aufgebracht werden, **dadurch gekennzeichnet, dass**
die Bremsdrücke an den Hinterachsbremsen bei einem Fehler weiterhin elektrisch auf der Basis von Soll- und lstbremsdrücken geregelt werden.

## Claims

1. Method for controlling the brake system of a motor vehicle, wherein the activation of the brake pedal is sensed by means of at least two signals,
wherein setpoint values for the brake pressures which are to be established at the wheel brakes are determined as a function of at least one of the activation signals and are applied,
wherein
- faults in the area of the means for sensing the activation of the brake pedal are determined, and
- in the event of a fault in the area of the means for sensing the activation of the brake pedal the wheel brake pressures at the front axle brakes are applied hydraulically by activation of the brake pedal,
**characterized in that** in the event of a fault the brake pressures at the rear axle brakes continue to be controlled electrically on the basis of setpoint and actual brake pressures.

2. Method according to Claim 1, **characterized in that** when the failure of a measuring device is detected the front axle brakes are actuated hydraulically.

3. Method according to Claim 1 or 2, **characterized in that** in the event of a fault a plausibility check between the brake pressures of the front axle brakes and the at least one signal which senses the activation of the brake pedal is carried out.

4. Method according to Claim 3, **characterized in that** in the case of plausibility the rear axle brakes are controlled, and in the case of implausibility the rear axle brakes are switched off.

5. Method according to one of the preceding claims, **characterized in that** the detected faults are stored in encoded form as fault information in a memory.

6. Device for controlling the brake system of a motor vehicle, having an electronic control unit which senses the activation of the brake pedal by means of at least one signal, which acquires, as a function of this at least one activation signal, setpoint values for the brake pressures which are to be established at the wheel brakes and applies them, which, in addition, determines faults in the area of the means for sensing the activation of the brake pedal, wherein, in the event of a fault in the area of the means for sensing the activation of the brake pedal, the control unit releases the hydraulic connection between the brake pedal and the wheel brakes, with the effect that the wheel brake pressures at the front axle are applied hydraulically by the activation of the brake pedal, **characterized in that** in the event of a fault the brake pressures at the rear axle brakes continue to be controlled electrically on the basis of setpoint and actual braking pressures.

## Revendications

1. Procédé de commande de l'installation de freins d'un véhicule automobile selon lequel on saisit l'actionnement de la pédale de frein par au moins deux signaux et, en fonction d'au moins l'un des signaux d'actionnement, on détermine les valeurs de consigne pour la pression de frein à établir dans les freins de roue et on régule cette pression, et
- on détermine des défauts dans le domaine de la saisie de l'actionnement de la pédale de frein, et
- en cas de défaut dans la zone de saisie de l'actionnement de la pédale de frein, on applique la pression des freins de roue au frein de l'essieu avant par l'actionnement de la pédale de frein de manière hydraulique
**caractérisé en ce qu'**
en cas de défaut, on continue de réguler la pression des freins de l'essieu arrière de manière électrique en se fondant sur des pressions de consigne et des pressions réelles de frein.

2. Procédé selon la revendication 1,
**caractérisé en ce qu'**
en cas de défaillance reconnue de l'installation de mesure, on commande hydrauliquement les freins de l'essieu avant.

3. Procédé selon la revendication 1 ou 2,
**caractérisé en ce qu'**
en cas de défaut, on effectue un contrôle de plausibilité entre les pressions des freins de l'essieu avant et au moins un signal correspondant à la saisie de l'actionnement de la pédale de frein.

4. Procédé selon la revendication 3,
**caractérisé en ce que**
si la plausibilité est vérifiée, on régule les freins de l'essieu arrière et si la plausibilité fait défaut, on coupe les freins de l'essieu arrière.

5. Procédé selon l'une des revendications précédentes
**caractérisé en ce qu'**
on enregistre de façon codée les défauts reconnus comme information de défaut dans une mémoire.

6. Dispositif de commande de l'installation de frein d'un véhicule automobile à l'aide d'une unité de commande électronique qui saisit l'actionnement de la pédale de frein par au moins un signal et qui en fonction d'au moins ce signal, établit des valeurs de consigne pour la pression à établir au niveau des freins de roue et régule ces pressions et qui, en outre, détecte des défauts dans la zone de saisie de l'actionnement de la pédale de frein et
en cas de défaut au niveau de la saisie de l'actionnement de la pédale de frein, l'unité de commande libère la liaison hydraulique entre la pédale de frein et les freins de roue de sorte que les freins de roue de l'essieu avant sont mis en oeuvre de manière hydraulique par l'actionnement de la pédale de frein,
**caractérisé en ce qu'**
en cas de défaut, on continue de réguler électriquement la pression des freins de l'essieu arrière en se fondant sur des pressions de consigne et des pressions réelles.
